**Europäisches Patentamt**

**European Patent Office**

**Office européen des brevets**

(11) Publication number : **0 329 494 B1**

(12) # EUROPEAN PATENT SPECIFICATION

(45) Date of publication of patent specification : **15.04.92 Bulletin 92/16**

(51) Int. Cl.⁵ : **B01J 4/00, B01J 8/44**

(21) Application number : **89400072.8**

(22) Date of filing : **10.01.89**

(54) **Mixing and dispersing device in a fluidized-bed reactor.**

(30) Priority : **12.01.88 JP 4604/88**

(43) Date of publication of application :
**23.08.89 Bulletin 89/34**

(45) Publication of the grant of the patent :
**15.04.92 Bulletin 92/16**

(84) Designated Contracting States :
**BE DE FR IT NL**

(56) References cited :
**GB-A- 813 489**
**GB-A- 2 118 454**
**US-A- 3 796 551**

(73) Proprietor : **SHIN-ETSU CHEMICAL CO., LTD.**
**6-1, Ohtemachi 2-chome**
**Chiyoda-ku Tokyo (JP)**
Proprietor : **KASHIMA VINYL CHLORIDE**
**MONOMER CO., LTD.**
**Tohwada 2-banchi, Oaza Kamisu-machi**
**Kashima-gun Ibaraki-ken (JP)**

(72) Inventor : **Eguchi, Atsushi**
**3-3-24, Shitte-chuo Kamisu-machi**
**Kashima-gun Ibaraki-ken (JP)**
Inventor : **Numata, Kouichi**
**2-7-31, Eda-kita Midori-ku**
**Yokohama-shi Kanagawa-ken (JP)**
Inventor : **Matsumoto, Fukuji**
**3-2-8-B-10, Ktago Takefu-shi**
**Fukui-ken (JP)**

(74) Representative : **Armengaud Ainé, Alain et al**
**Cabinet ARMENGAUD AINE 3 Avenue**
**Bugeaud**
**F-75116 Paris (FR)**

## Description

## BACKGROUND OF THE INVENTION

The present invention relates to a device for mixing and dispersing gases in a fluidized-bed reactor. More particularly, the invention relates to a device for mixing and dispersing gaseous feeds and a solid material, e.g., solid catalyst, under fluidization in a fluidized-bed reactor, which has greatly improved heat resistance, abrasion resistance and corrosion resistance and is durable in a continuous running of the reactor over a long period of time.

As is known, a fluidized-bed reactor used in chemical plants has a base plate which is a plate of a porous material or a perforated plate through which the feed gas is passed upwardly and blown into the reactor so as to ensure uniform fluidization of the powdery or particulate solid such as a catalyst and the like as well as mixing of gaseous feeds and contacting of the gas with the solid catalyst.

GB-A-813489 and US-A-3796551 disclose fluidized-bed reactor chambers comprising mixing and dispersing devices made from ceramic material which are mounted on the perforations of the base plate of the reactor.

A problem in a fluidized-bed reactor having such a porous or perforated base plate is that the base plate is under a heavy abrasive action to be rapidly worn out because the gaseous feed passes through the pores or perforations at a very high velocity and the solid particles under fluidization constantly impinge on the upper surface of the base plate. It is not rare that, when the structure of the porous or perforated base plate or accessory parts therearound is modified to facilitate mixing of gases, for example, by providing gas feed nozzles, the problem of abrasion and corrosion in these accessory parts is similar to or rather more serious than that in the base plate per se. The subject matter of the present invention is to provide a base plate and a means of introduction of gaseous feed or feeds, which are generally referred to as a mixing and dispersing device hereinbelow, having greatly improved durability.

Many of the chemical reactions performed in fluidized-bed reactors proceed exothermically so that abrasion of the mixing and dispersing device is sometimes accompanied by high-temperature corrosion. This situation requires use of an expensive refractory and anti-corrosive alloy as a material of the mixing and dispersing device although no complete solution has yet been obtained even by using a most expensive metallic material or alloy such as Incolloy so that it is eagerly desired to develop a mixing and dispersing device having high resistance against abrasion and corrosion and havcing high durability.

When the base plate has been seriously worn out by abrasion, the reactor can be operated no longer with stability leading, in some cases, to a danger of explosive destruction of the reactor. Accordingly, it is a usual practice in chemical plants that reactors or parts therein subject to the problem of heavy abrasion are replaced with new ones periodically after a relatively short period of running. Namely, stable running of such a reactor can be ensured only by a very careful periodical inspection and early refreshment even when the reactors or parts are constructed using a very expensive abrasion- and corrosion-resistant alloy. Such a means is of course undesirable in respect of the productivity of the plant even by setting aside the direct costs for inspection and refreshment. Taking the so-called oxychlorination reaction of a hydrocarbon compound with a gaseous chlorine source and air or oxygen by contacting with a solid catalyst such as copper chloride in a fluidized-bed reactor as an example, long-term continuous running of the reactor has not yet been achieved due to the problem in the durability of the mixing and dispersing device even by using a high-class material.

Thus, it is an important technological problem in chemical engineering to develop a highly durable mixing and dispersing device for feed gases in a fluidized-bed reactor by using a relatively inexpensive material.

## SUMMARY OF THE INVENTION

The present invention accordingly has an object to develop a mixing and dispersing device for feed gases in a fluidized-bed reactor without the above described problems and disadvantages in the prior art devices in respect of the resistance against heat, abrasion and corrosion so as to enable continuous long-term running of the reactor.

Consequently, the present invention relates to a fluidized-bed reactor equipped with a base plate having a plurality of perforations on each of which a mixing and dispersing device for introduction of a gaseous feed into the fluidized-bed reactor is mounted, characterized in that said mixing and dispersing device is at least partly made of a ceramic material consisting of a composite of silicon carbide and silicon and silicon nitride.

## BRIEF DESCRIPTION OF THE DRAWING

The figures each illustrate a partial cross sectional view of a mixing and dispersing device according to the invention.

## DETAILED DESCRIPTION OF THE PREFERRED EMBODIMENTS

As is described above, the most characteristic feature of the inventive mixing and dispersing device is that the device is partly or wholly built of a ceramic material consisting of composite of silicon carbide and silicon and silicon nitride, of which a composite of silicon carbide and silicon is particularly preferred in respect of the higher abrasion resistance as well as less difficulty in fabrication of a part having a relatively complicated configuration than the other materials.

To give an explanation taking a composite of silicon carbide and silicon as an example of the ceramic materials, it is known that this material is subject to corrosion in an atmosphere containing chloride gas as is encountered in the chlorination of a hydrocarbon compound at a high temperature or when it is contacted with tar pitch at a high temperature even in the absence of chlorine in the atmosphere. Therefore, it has been a generally accepted understanding that this material is quite unsuitable as a material of parts in a chemical reactor running at a high temperature. It is a quite unexpected discovery made by the inventors that a composite of silicon carbide and silicon and silicon nitride as a class of ceramic materials is highly resistant against abrasion and the rate of corrosion is greatly decreased when a part made of such a composite material is used in a reactor in which feeds of a gaseous chlorine source and air are contacted with a powdery solid catalyst such as copper chloride in a fluidized condition so that the durability of the device can be greatly extended as compared with a device made of a conventional heat-resistant alloy.

Needless to say, ceramic materials are inherently highly resistant against heat and abrasion but generally have defects that an article made of a ceramic material has a poor impact strength and that articles having a complicated form or configuration can be fabricated from a ceramic material only with great difficulties. In a fluidized-bed reactor, the base plate of the fluidized-bed must withstand the heavy load of the solid catalyst suddenly deposited thereon when running of fluidization is interrupted or also must withstand the impacting stress caused by the impingement of an intermixed foreign matter or by the vibration of the feed nozzles.

In order to avoid breaking of ceramic-made parts by impact leading to catastrophic destruction of the device as a whole, it is proposed that the main structure of the device is formed of a metallic material and a ceramic-made body is bonded thereto. The metal-made part and the ceramic-made part are bonded together conveniently by using an adhesive in order to be able to use a ceramic-made body having a configuration as simple as possible. The adhesive used here should be inert against the environment in which the device is installed. In the oxychlorination reaction, for example, the adhesive must be inert against hydrogen chloride, ethylene, air or oxygen, 1,2-dichloroethane, water vapor and copper chloride catalyst at the reaction temperature so that the adhesive is limited to inorganic ones such as silica-alumina based adhesives containing substantially no organic matter.

Adhesive bonding of a ceramic-made part and a metal-made part requires some consideration on the difference between the thermal expansion coefficients of the respective materials. For example, silicon carbide and a carbon steel have a relative thermal expansion coefficients of abolut 4 to 11. Therefore, a structural body fabricated by adhesively bonding a ceramic-made part and a metal-made part over a large area of adhesion is possibly subject to a danger of exfoliation by a change in temperature. It would be rather a better design that the ceramic-made part and the metal-made part are adhesively bonded over a limited area alone and other areas are left free without adhesive bonding so as not to receive the stress by thermal expansion. This design, however, cannot be free from another problem that an interstitial space is formed between the parts over the unbonded areas.

It shoud be taken into account that a mixing and dispersing device frequently receives vibrations because the device is to serve as a passage way of a gaseous feed or a powdery feed flowing at a high velocity. When a ceramic-made part has a free end not adhesively bonded to the metal-made part, it may take place that the parts come apart from each other under vibration which destroys the adhesive layer. This problem can be solved usually by interposing a damping material between the ceramic-made part and the metal-made part. The requirements for the damping material are similar to those for the adhesive. For example, usable damping materials in an oxychlorination reaction of ethylene include fibrous, powdery or mat-like silica-alumina materials and elastomeric fluorocarbon resins.

In the following, the mixing and dispersing device of the invention is described in more detail by way of actual examples making reference to the accompanying drawing.

Example 1.

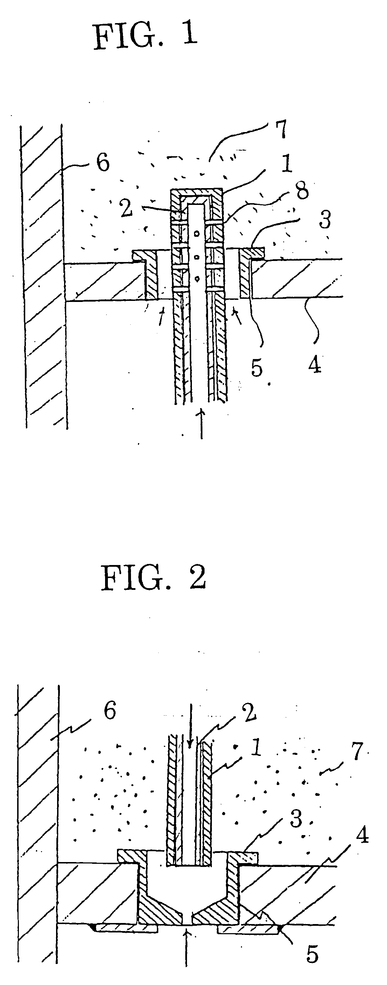

Figure 1 of the accompanying drawing illustrates an embodiment of the mixing and dispersing device of the invention mounted on the base plate of a fluidized-bed reactor by a partial cross sectional view. The metal-made base plate 4 supported by the wall 6 of the reactor, in which a powdery material 7 is under fluidization, has a plurality of perforations, into each of which a flanged bushing 3 made of a sintered ceramic material having an outer diameter of 70 mm and a height of 40 mm is put and adhesively bonded with an interposed inorganic adhesive layer 5. The bore of the bushing 3 is coaxially penetrated by a ceramic-made tubular body 1 having an outer diameter substantially smaller than the inner diameter of the bushing 3. The ceramic-made tubular body 1 is reinforced with a metal-made lining tube 2 and has a closed upper end. The perforations 8 laterally opening in the wall of the tubular body 1 serve as the passage way of one of the gaseous feeds. The concentricity of the bushing 3 and the tubular body 1, which together form the mixing and dispersing device of the invention, is ensured by a suitable means not shown in the figure. The gap space between the bushing 3 and the tubular body 1 provides a passage way for the other gaseous feed. These gaseous feeds are introduced upwardly into the reactor through the respective passage ways and uniformly mixed together and dispersed in the space inside the reactor above the perforated plate 4 where they pertain to the catalytic reaction in contact with the particles 7 of the powdery catalyst under fluidization.

In an example, two successive continuous running tests each for 8000 hours were undertaken at a temperature of 230 to 250 °C for an oxychlorination reaction of ethylene using a copper chloride catalyst supported on an alumina carrier by introducing ethylene, hydrogen chloride and oxygen or air into a fluidized-bed reactor equipped with a base plate having ceramic-made mixing and dispersing devices as described above. The mixing and dispersing devices were made of, a composite of silicon carbide and silicon or silicon nitride. The pressure inside the reactor was kept at $2.0.10^5$Pa (2.0 kg/cm$^2$G) and the maximum flowing velocity of the feed gases passing through the base plate 4 was 60 meters per second. The number of the mixing and dispersing devices installed in the base plate was 25.

After 16,000 hours as a total'of running as described above, the base plate 4 was demounted from the reactor and the mixing and dispersing devices were inspected for a change caused by abrasion or corrosion. It was found that the decrease in the wall thickness of the ceramic-made bushings was about 0.05 mm in the silicon carbide-made bushings while the decrease was much smaller in the bushings made of a composite of silicon carbide and silicon or silicon nitride. The surface of the bushings was found to have a slightly increased smoothness.

For comparison, the same test running as above was undertaken except that the ceramic-made mixing and dispersing devices were replaced with another set of mixing and dispersing devices made of Incolloy 800 alloy. After 16,000 hours of the test running, the devices were found to have a bore diameter expanded by 12.4% on an average.

Although the above description is given for a device consisting of a ceramic-made bushing and tubular body penetrating the bushing, the scope of the present invention is not limited thereto but include a variety of modifications capable of mixing gaseous feeds such as a device with a nozzle having a constricted opening to effect mixing of gases ejected therethrough, a device to cause a sudden deflection of the high-speed flow of a gaseous mixture, a device in which two gaseous feeds meet with each other counter-currently and so on provided that the configuration of the device is not too complicated to allow fabrication.

Example 2.

Figure 2 of the accompanying drawing illustrates another embodiment of the invention by a partial cross section. In this embodiment, the bushing 3 made of a composite of silicon carbide and silicon is not penetrated by the tubular body 1 also made of a composite of silicon carbide and silicon and reinforced with a metal-made lining tube 2 but the tubular body 1 is held concentrically above the bushing 3 in a vertical disposition opening downwardly. Each of the 25 bushings mounted on the perforated base plate 4 of the reactor had an outer diameter of 70 mm and a height of 40 mm. The bore of the bushing 3 is constricted in the lower portion and one of the feed gases is introduced upwardly through this constricted opening of the bushing 3 at an increased velocity while the other feed gas is blown out of the downwardly opening tubular body 1 so as to cause rapid and complete mixing of the gases inside the bore of the bushing 3.

The above described mixing and dispersing device was tested in a test running under the same conditions as in Example 1. After 8000 hours of continuous running of the fluidized-bed reactor, it was found by inspection that the decrease in the wall thickness of the bushings 3 and the tubular bodies 1 was 0.05 mm or smaller.

For comparison, the same devices as above were fabricated from Incolloy 825 alloy and tested just in the same manner as described above. The results of test running were that the wall thickness of the bushings 3 was decreased by 2.15 mm on an average and the wall thickness of the tubular bodies 1 was decreased by 2.86 mm on an average.

Fluidized-bed reactors equipped with a perforated base plate having the inventive ceramic-made mixing and dispersing devices mounted thereon can be used in various fluidized-bed chemical reactions including, besides the above described oxychlorination reaction for the synthesis of chlorinated products, synthesis of acrylonitrile by the ammoxidation of propylene, synthesis of phthalic anhydride from 1,2-xylene or benzene, catalytic cracking of hydrocarbons and so on usually undertaken in a fluidized-bed reactor.

**Claims**

1. A fluidized-bed reactor equipped with a base plate having a plurality of perforations on each of which a mixing and dispersing device for introduction of a gaseous feed into the fluidized-bed reactor is mounted, characterized in that said mixing and dispersing device is at least partly made of a ceramic material consisting of a composite of silicon carbide and silicon and silicon nitride.

2. The fluidized-bed reactor as claimed in claim 1, characterized in that said mixing and dispersing device is adhesively bonded to the perforation of the base plate through a layer of an inorganic adhesive.

3. The fluidized-bed reactor as claimed in claim 1, characterized in that said mixing and dispersing device consists of a bushing inserted into the perforation and a tubular body substantially concentrically penetrating the bore of the bushing.

4. The fluidized-bed reactor as claimed in claim 1, characterized in that said mixing and dispersing device consists of a bushing inserted into the perforation and a downwardly opening tubular body substantially concentrically held above the bore of the bushing.

**Patentansprüche**

1. Wirbelbettreaktor, ausgerüstet mit einer Grundplatte, die eine Vielzahl von Durchlässen aufweist, auf denen jeweils eine Misch- und Dispergiervorrichtung zum Einführen eines gasförmigen Materials in den Wirbelbettreaktor montiert ist, dadurch **gekennzeichnet**, daß die Misch- und Dispergiervorrichtung zumindest teilweise aus einem keramischen Material gefertigt ist, das aus einem Verbund aus Siliciumcarbid und Silicium und Siliciumnitrid besteht.

2. Wirbelbettreaktor nach Anspruch 1, dadurch **gekennzeichnet**, daß die Misch- und Dispergiervorrichtung durch eine Schicht eines anorganischen Klebstoffes an den Durchlaß der Grundplatte geklebt ist.

3. Wirbelbettreaktor nach Anspruch 1, dadurch **gekennzeichnet**, daß die Misch- und Dispergiervorrichtung aus einer in den Durchlaß eingefügten Buchse und einem rohrförmigen Körper besteht, der die Bohrung der Buchse im wesentlichen konzentrisch durchdringt.

4. Wirbelbettreaktor nach Anspruch 1, dadurch **gekennzeichnet**, daß die Misch- und Dispergiervorrichtung aus einer in dem Durchlaß eingefügten Buchse und einem sich nach unten öffnenden rohrförmigen Körper besteht, der im wesentlichen konzentrisch über der Bohrung der Buchse gehalten ist.

**Revendications**

1. Réacteur à lit fluidisé muni d'une plaque de base comportant une pluralité de perforations sur chacune desquelles est monté un dispositif de mélange et de dispersion pour l'introduction d'une alimentation gazeuse dans le réacteur à lit fluidisé, caractérisé en ce que ce dispositif de mélange et de dispersion est, au moins partiellement, constitué d'un matériau céramique consistant en un composite de carbure de silicium et de silicium et de nitrure de silicium.

2. Réacteur à lit fluidisé selon la revendication 1 caractérisé en ce que le dispositif de mélange et de dispersion est lié par adhérence à la perforation de la plaque de base par l'intermédiaire d'une couche d'un adhésif inorganique.

3. Réacteur à lit fluidisé selon la revendication 1 caractérisé en ce que le dispositif de mélange et de dispersion consiste en une douille introduite dans la perforation et en un corps tubulaire qui pénètre sensiblement concentriquement dans l'alésage de la douille.

4. Réacteur à lit fluidisé selon la revendication 1, caractérisé en ce que le dispositif de mélange et de dispersion consiste en une douille introduite dans la perforation et en un corps tubulaire débouchant vers le bas, maintenu sensiblement concentriquement au dessus de l'alésage de la douille.

# FIG. 1

# FIG. 2